# EUROPEAN PATENT SPECIFICATION

(11) **EP 1 059 591 B1**
(45) Date of publication and mention of the grant of the patent: **15.06.2011**
(21) Application number: 00109243.6
(22) Date of filing: 28.04.2000
(51) Int. Cl.: G06F 15/02

(54) **Electronic calculation apparatus with currency converting function and storage medium storing currency converting calculation display program**
Elektronisches Rechengrät mit Währungsumrechnungsfunktion und Speichermedium zur Speicherung eines Programms zur Darstellung der Währungsumrechnung
Dispositif de calcul électronique avec fonction de conversion de devises et support d'enregistrement pour stocker le logiciel d'affichage du calcul de conversion de devises

(30) Priority: 30.04.1999 JP 12407999
(43) Date of publication of application: 13.12.2000
(73) Proprietor: CASIO COMPUTER CO., LTD., Shibuya-ku, Tokyo (JP)
(72) Inventor: Ogawa, Muneyuki, c/o Casio Computer Co., Ltd., Hamura-shi, Tokyo 205-8555 (JP); Sango, Takayo, c/o Casio Computer Co., Ltd., Hamura-shi, Tokyo 205-8555 (JP)
(74) Representative: Grünecker, Kinkeldey, Stockmair & Schwanhäusser Anwaltssozietät

(56) References cited:
- WO-A-99/05609
- DE-U- 29 716 179
- DE-U- 29 819 312
- FR-A- 2 765 005

## Description

The present invention relates to an electronic calculation apparatus with a currency conversion function for currency conversions between, for example, the Euro and the German mark, French franc, Italian lira, etc. and to a storage medium storing a currency conversion calculation display program.

Electronic calculation apparatuses with a currency conversion function have been applied for practical use, which convert an amount of currency of one country into that of another country, for example, from the US dollar into the German mark, French franc, Italian lira, etc.

If a yen-dollar conversion is executed using such an electronic calculation apparatus with a currency conversion function and when an amount of money is input and a currency conversion is instructed after a yen-dollar rate has been input and set, the input amount of money in yens or dollars is converted into that in dollars or yens, respectively, in accordance with the previously input yen-dollar rate, to display the result.

In addition, with the conventional electronic calculation apparatus with a currency conversion function, when a yen-dollar or dollar-yen conversion is executed and displayed and an operation key "+", "-", "X", or "÷" is then operated while the converted value is being displayed, a conversion mode is shifted to a calculation mode to execute a calculation using the converted value directly as an operated number.

Conversely, when a normal numerical calculation is carried out to display the result and, for example, a conversion key for a yen-dollar conversion, a dollar-yen conversion, or the like is then operated, the calculation mode is shifted to the conversion mode to carry out a currency conversion using the calculated value directly as an operated number.

The conventional electronic calculation apparatus with a currency conversion function, however, displays such a result of a currency conversion or a calculation in a single line, and thus cannot display converted values of two or more currencies in parallel; once it has converted a currency "A" into a currency "B" for display, the currency "B" must be converted back into the currency "A" in order to execute a calculation using the original currency "A". Thus, it is disadvantageously cumbersome to alternately and repetitively convert a plurality of currencies or calculate an arbitrary one of the currency converted values as appropriate.

A pocket calculator furnished with currency conversion functions is described in FR 2 765 005. The pocket calculator comprises two large display elements, wherein one of the two large display elements primarily serves as display element for the inputs and outputs of the pocket calculator, while the other large display element simultaneously presents the inputs/outputs in a currency converted manner.

It is an object of the present invention to provide an electronic calculation apparatus with a currency conversion function which can set an input numerical value as a value of a currency, convert this value into a value of another currency, and display the values of the original currency and the converted currency, as set out in independent Claim 1.

A related object of the present invention is to provide a storage medium storing the above currency conversion function.

A further object of the present invention is to provide an electronic calculation apparatus with a currency conversion function which can set a result of arbitrary calculation as a value of a currency, convert this value into a value of another currency, and display the values of the original currency and the converted currency.

A still further object of the present invention is to provide a storage medium storing the above currency conversion function.

Yet another object of the present invention is to provide an electronic calculation apparatus with a currency conversion function which can specify an arbitrary one of plural currency converted values as a numerical value to be calculated.

A still further object of the present invention is to provide a storage medium storing the above currency conversion function.

The present invention may further comprises calculation means for executing a calculation including four rules, and wherein the currency conversion means converts a result of calculation obtained by the calculation means into a value of the second currency.

The present invention may further comprises calculation means for executing a calculation including four rules for one of the values of the first and second currencies displayed by the display means.

According to the present invention, it is easy to alternately and repetitively convert a plurality of currencies or calculate an arbitrary one of the currency converted values as appropriate.

Additional objects and advantages of the present invention will be set forth in the description which follows, and in part will be obvious from the description, or may be learned by practice of the present invention.

The objects and advantages of the present invention may be realized and obtained by means of the instrumentalities and combinations particularly pointed out hereinafter.

The accompanying drawings, which are incorporated in and constitute a part of the specification, illustrate presently preferred embodiments of the present invention and, together with the general description given above and the detailed description of the preferred embodiments given below, serve to explain the principles of the present invention in which:
FIG. 1 is a block diagram showing a configuration of an electronic circuit according to an embodiment of an electronic calculation apparatus with a currency conversion function according to the present invention;
FIG. 2 is a flow chart showing a calculation mode process carried out by the electronic calculation apparatus;
FIG. 3 is a flow chart showing a conversion mode process carried out by the electronic calculation apparatus;
FIGS. 4A to 4F show how shifting from a calculation process to a currency conversion process is displayed, the shifting occurring in conjunction with the calculation mode process and the conversion mode process carried out by the electronic calculation apparatus; and
FIGS. 5A to 5E show diagrams showing how shifting from the currency conversion process to the calculation process is displayed, the shifting occurring in conjunction with the calculation mode process and the conversion mode process carried out by the electronic calculation apparatus.

A preferred embodiment of an electronic calculation apparatus with a currency conversion function according to the present invention will now be described with reference to the accompanying drawings.

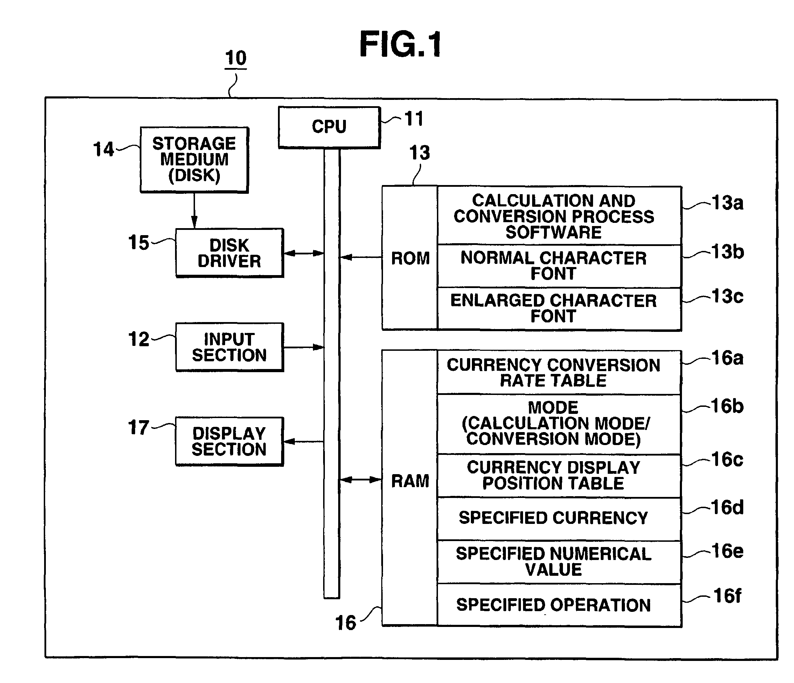

FIG. 1 is a block diagram showing a configuration of an electronic calculation apparatus with a currency conversion function according to the embodiment of the present invention.

This electronic calculation apparatus 10 with a currency conversion function comprises a control section (central processing unit: CPU).

In response to key operation signals or the like input from an input section 12, the CPU 11 starts a system program previously stored in a ROM 13 or a calculation apparatus controlling program stored in an external storage medium such as a floppy disc 14, via a storage medium read section such as a disc driver 15 to control the operation of each component of the circuit using a RAM 16 as a work memory.

The input section 12, ROM 13, disk driver 15, and RAM 16, as well as a liquid-crystal display section 17 are connected to the CPU 11 via a system bus.

The input section 12 is provided with a CAL(calculation)/CONV(conversion) key for instructing switching between a calculation mode and a currency conversion mode and with numerical keys, operation keys "+", "-", "X", "÷", an AC(all clear) key, and an "=" key for use in calculation or currency-conversion operations in the corresponding mode, as well as a SET(execution) key, cursor keys "↑", "↓", "→", "←", and the like.

The ROM 13 stores therein a system program controlling the operation of the entire electronic calculation apparatus, a calculation/conversion process program 13a controlling a calculation process in the calculation mode and a currency conversion process in the currency conversion mode, normal-character font data 13b for a display font of a normal character size for the liquid-crystal display section 17, which provides a 4-line display, enlarged-character font data 13c for a display font of an enlarged character size that is twice as large as the normal character size, etc.

The RAM 16 comprises a currency conversion rate table memory 16a, a mode data memory 16b, a currency display position table memory 16c, a specified-currency data memory 16d, a specified-numerical-data memory 16e, specified-operation data memory 16f, etc.

The currency conversion rate table memory 16a stores, after updating as appropriate, a conversion rate for each currency input in response to a user's operation of the input section 12, for example, a currency rate between the yen and the dollar and the Euro and a currency rate between the Euro and the German mark DEM, French franc FRF, or Italian lira ITL.

The mode data memory 16b stores mode data indicating whether the current operation mode of the electronic calculation apparatus is the calculation or currency conversion mode.

The currency display position table memory 16c stores positional data indicating a display line for each currency name (Euro, mark, franc, lira) set for display in a corresponding line on a display screen of the liquid-crystal display section 17, which provides the 4-line display.

The specified-currency data memory 16d stores the type of a currency specified by a cursor on the display screen in the currency conversion mode.

The specified-numerical-data memory 16d stores the numerical value of a currency specified by the cursor on the display screen in the currency conversion mode.

The specified-calculation data memory 16f stores the contents of an operation type corresponding to an operation key input in response to the last key operation in the input section 12.

The liquid-crystal display section 17 has a display area composed of four horizontal lines, and in the calculation mode, uses two upper lines as a display region for the operators "+", "-", "×", and "÷", , while using two lower lines as a 1-line numerical display region based on the enlarged font. In the calculation mode, the enlarged-character font data 13c stored in the ROM 13 is used for a display font for the numerical data. Whereas, in the currency conversion mode, the liquid-crystal display section 17 uses the top line as a display region for a Euro currency symbol "€" and its numerical value, the second line from the top as a display region for the German-mark currency symbol "DEM" and its numerical value, the third line as a display region for the French-franc currency symbol "FRF" and its numerical value, and the fourth line as a display region for the Italian-lira currency symbol "ITL" and its numerical value. In the currency conversion mode, the normal-character font data 13b stored in the ROM 13 is used for a display font for the currency symbols and numerical data.

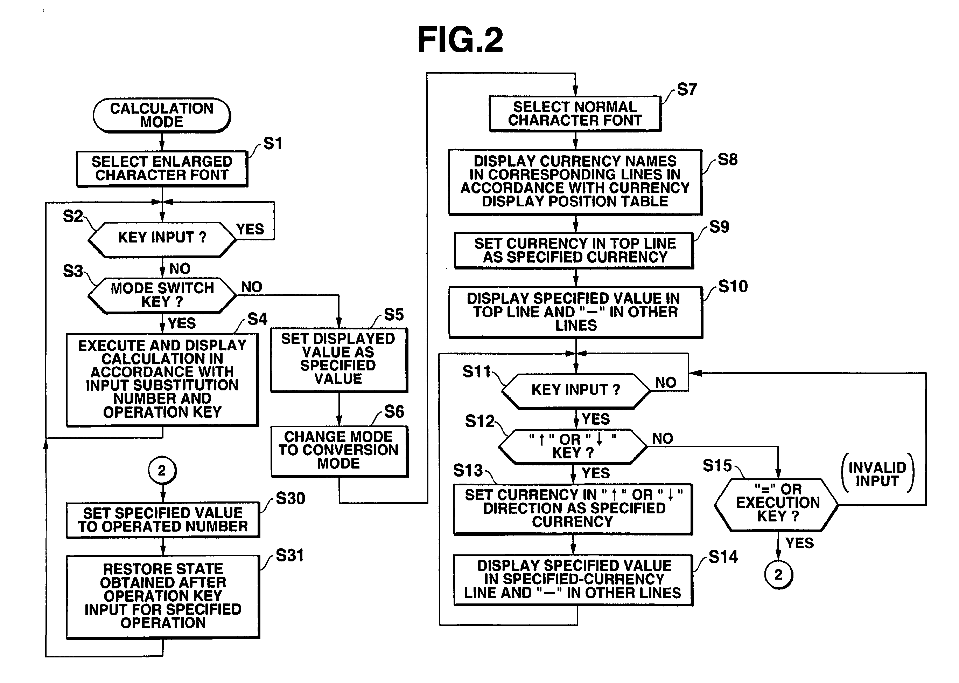

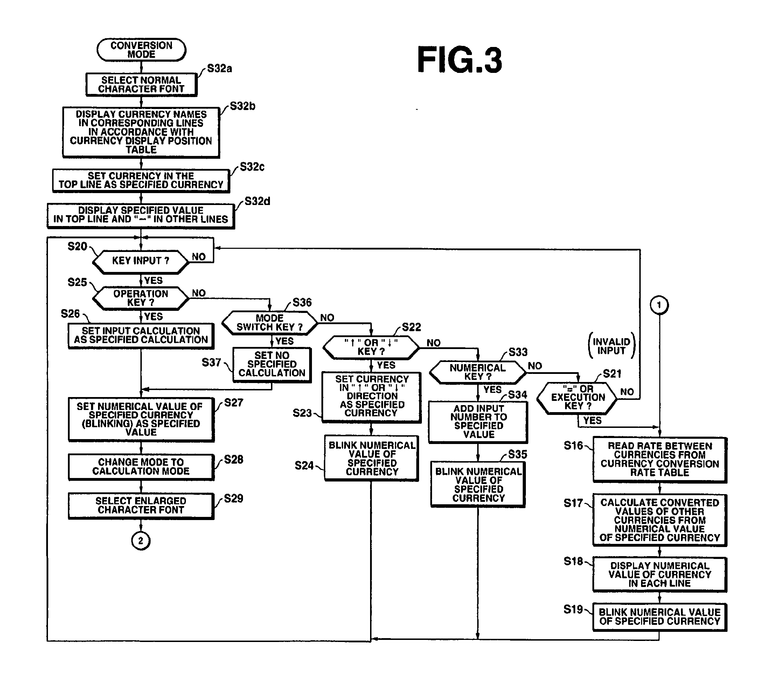

Next, the operation of the electronic calculation apparatus with a currency conversion function as configured as described above will be described. FIG. 2 is a flow chart showing a calculation mode process carried out by the electronic calculation apparatus. FIG. 3 is a flow chart showing a conversion mode process carried out by the electronic calculation apparatus.

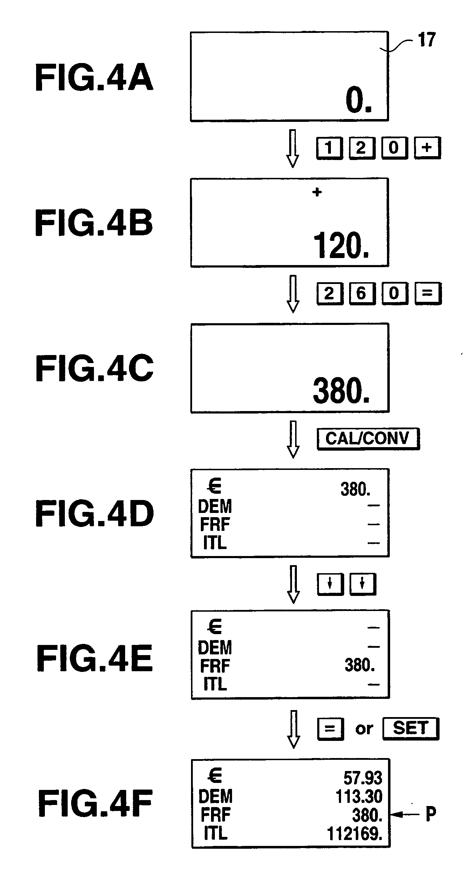

FIGS. 4A to 4F show how shifting from the calculation mode process to the conversion mode process in the electronic calculation apparatus is displayed.

First, in a calculation mode process start state where calculation mode data is stored in the mode data memory 16b in the RAM 16, the enlarged-character font data 13c previously stored in the ROM 13 is selected as the display font for the liquid-crystal display section 17 and the process waits for key inputs (steps S1, S2).

Then, when the numeral and operation keys in the input section 12 are operated to input "120 + 260 =", the corresponding numerical values and operators are sequentially displayed on the liquid-crystal display section 17 in the enlarged character font in response to the input operations. In addition, a numerical calculation process is executed in accordance with a calculation process program included in the calculation/conversion process program 13a, with a calculation result "380" displayed using the enlarged character font (steps S2, S3, S4).

Thus, the calculation result "380" obtained and displayed by the arbitrary numerical calculation process is directly used for currency conversions. Accordingly, when the CAL/CONV key in the input section 12 is operated, the calculated and displayed numerical data "380" is stored in the specified-numerical-data memory 16e in the RAM 16, and the calculation mode data stored in the mode data memory 16b is then changed to currency conversion data to start a currency conversion process program included in the calculation/conversion process program 13a (steps S2, S3, S5, S6).

Then, the normal-character font data 13b previously stored in the ROM 13 is selected as the display font for the liquid-crystal display section 17 and used to provide a 4-line display where each currency symbol is displayed in the corresponding line in accordance with the display line position of each currency name (symbol) stored and set in the currency display position table memory 16c in the RAM 16, as shown in FIG. 4D (steps S7, S8).

In this case, the Euro, which is set and displayed at the top line position, is a specified currency stored in the specified-currency data memory 16d in the RAM 16, and the numerical data "380" for the calculation result stored in the specified-numerical data memory 16e is displayed for the top line position. In addition, a bar symbol "-" meaning no data is displayed in the second and subsequent lines (steps S9, S10).

Subsequently, when a cursor key "↓" is operated twice as shown in FIG. 4E to set, for the French franc FRF, the numerical data "380" for the calculation result displayed at the top line position, where the Euro currency symbol "€" is being displayed, the specified currencies stored in the specified-currency data memory 16d are sequentially set and stored in the order of the Euro, the mark, and the franc, while the bar symbol "-" meaning no data is displayed in the other line positions as described above (steps S11, S12, S13, S14).

Then, with the numerical data "380" for the calculation result remaining displayed at the franc line position, the "=" key or SET(execution) key in the input section 12 is operated to convert the "380" francs into Euros, marks, and liras. As shown in FIG. 4F, the currency rate between the Euro and the mark and the franc and the lira set and stored in the currency conversion rate table memory 16a in the RAM 16 is read out, and based on this rate, a converted value of each currency is calculated from the specified numerical value "380" corresponding to the currently specified currency franc and is displayed at the line position of the corresponding currency symbol (steps S15, S16, S17, S18). Then, the numerical value "380" of the specified currency franc blinks as a cursor specified position, shown by an arrow P (step S19).

As described above, the numerical data is calculated in the calculation mode, and the calculation mode is switched to the currency conversion mode to display the four currency names (symbols) in parallel or simultaneously. Subsequently, the cursor is used to move the numerical data to the line position of an arbitrary one of these currencies, and the "=" or SET key is used to instruct a currency conversion. Then, the converted values of the other currencies are calculated in accordance with the currency rate for these currencies. Consequently, the arbitrary calculation result data obtained in the calculation mode can be specified as the numerical value of the arbitrary currency and converted into the other displayed currencies, with the results displayed in parallel.

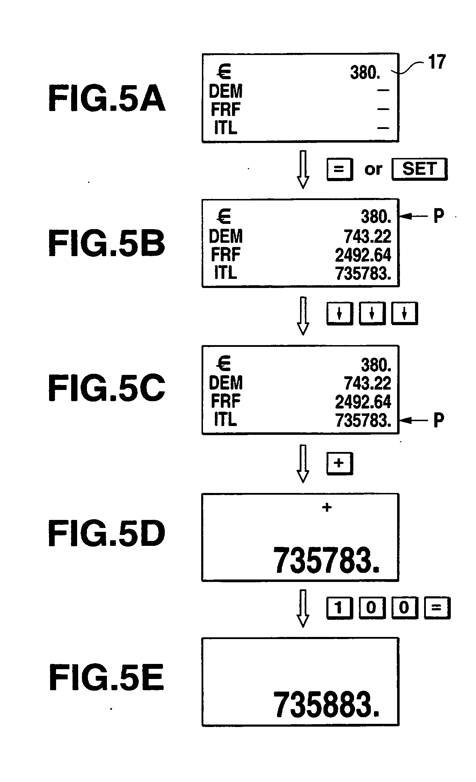

FIG. 5A to 5E show how shifting from the currency conversion process to the calculation process is displayed, the shifting occurring in conjunction with the calculation mode process and the conversion mode process carried out by the electronic calculation apparatus.

For example, as in the state shown in FIG. 4D where the calculation mode is switched to the currency conversion mode, the Euro, which is displayed at the top line position, is a specified currency stored and set in the specified-currency data memory 16d in the RAM 16, and "380" is displayed as a specified numerical value corresponding to the specified currency Euro and stored in the specified-numerical data memory 16e, as shown in FIG. 5A. Then, the "=" key or SET(execution) key in the input section 12 is operated to convert the "380" Euros into marks, francs, and liras, as shown in FIG. 5B.

Then, the currency rate between the Euro and the mark and the franc and the lira set and stored in the currency conversion rate table memory 16a in the RAM 16 is read out, and based on this rate, a converted value of each of the other currencies is calculated from the specified numerical value "380" corresponding to the currently specified currency Euro and is displayed at the line position of the corresponding currency symbol (steps S15, S16, S17, S18). Then, the numerical value "380" of the specified currency Euro blinks as the cursor specified position, shown by the arrow P (step S19).

Then, with the converted values of the four currencies displayed on the liquid-crystal display section 17 in parallel, in order to execute a calculation process using the converted value "735783" of the Italian lira as it is, the cursor key "↓" in the input section 12 is operated three times as shown in FIG. 5C. Then, the cursor specified position, shown by the arrow P, is moved to the line position of the currency symbol lira, where its converted value "735783" blinks (steps S20, S22, S23, S24).

Subsequently, when the operation key "+" in the input section 12 is operated to calculate the lira converted value "735783 + 100", the input operation type "+" is stored in the specified-operation data memory 16f and the blinking converted value "735783" of the specified currency lira is stored and set in the specified-value data memory 16e (steps S20, S25, S26, S27).

Then, the currency conversion mode data stored in the mode data memory 16b is changed to the calculation mode data to start the calculation process program included in the calculation/conversion process program 13a, while the enlarged-character font data 13c previously stored in the ROM 13 is selected as the display font for the liquid-crystal display section 17 (steps S28, S29).

In the currency conversion mode stored in the specified-value data memory 16e, the converted value "735783" of the specified currency lira is set as a operated number, and the process enters the calculation process state established immediately after inputting of the specified operation type "+" stored in the specified-operation data memory 16f. That is, the operated number "735783" is displayed in the enlarged character font using the lower two lines of the liquid-crystal display section 17 as one line, whereas the operation symbol "+" of the input specified operation type is displayed in the upper part (steps S30, S31).

Thereafter, when the input section 12 is operated to input "100" for the operated number "735783" and operation type "+" and to input "=", a corresponding calculation process is executed, and as shown in FIG. 5E, the calculation result "735883" is displayed on the liquid-crystal display section 17 using the enlarged-character font as described above (steps S2, S3, S4).

As described above, in the currency conversion mode, the currency conversion is carried out based on the displayed numerical value corresponding to the arbitrary one of the four currencies displayed in the corresponding lines in the liquid-crystal display section 17, to calculate and display the converted values of the three other currencies in parallel. Then, the cursor key "↑" or "↓" is used to specify the converted value "735783" of the arbitrary currency, and the operation key "+" is operated using this converted value as the operated number. Then, the currency conversion mode is switched to the calculation mode, and the currency converted value "735783", which is specified by the cursor key "↑" or "↓", is displayed on the liquid-crystal display section 17 using the enlarged-character font, together with the operation symbol "+". When a number "100" and "=" are subsequently input, "735783 + 100 =" is calculated with the calculation result "735883" displayed, whereby an arbitrary one of the four types of currency conversion data obtained in the currency conversion mode can be directly used as the operated number to execute an arbitrary calculation process.

On the other hand, in the initializing state where this electronic calculation apparatus has been powered on, if currency conversion mode data is stored and set in the mode data and the currency conversion process program included in the calculation/conversion process program 13a has been started, the normal-character font data 13b, which is previously stored in the ROM 13, is selected as the display font for the liquid-crystal display section 17. Then, the normal-character font data 13b is used to provide a 4-line display where each relevant currency symbol is displayed in the corresponding line in accordance with the display line position of each currency name (symbol) stored and set in the currency display position table memory 16c of the RAM 16 (first line: Euro, second line: mark, third line: franc, fourth line: lira) (steps S32a, S32b).

In this case, the Euro, which is set and displayed at the top line position, is stored in the specified-currency data memory 16d in the RAM 16 as the specified currency, while the numerical data stored in the specified-numerical data memory 16e (the initial specified value is zero) is displayed relative to the top line position. At the same time, the bar symbol "-" meaning no data is displayed at the second and subsequent line positions (steps S32c, S32d).

Subsequently, when the cursor key "↓" is operated twice to convert the franc, the reference, into another currency, the specified currencies stored in the specified-currency data memory 16d are sequentially set and stored in the order of the Euro, the mark, and the franc in accordance with the cursor operations. In addition, a specified value (in this case, zero) is moved and displayed at the line position of the specified currency franc and blinks as the cursor specified position (steps S20, S22, S23, S24).

Then, with the franc set as the specified currency, the numerical keys in the input section 12 are operated to input "380" in order to convert, for example, "380" francs into another currency. The input value "380" is stored in the specified-numerical data memory 16e and blinks at the line position corresponding to the specified currency franc (steps S20, S33, S34, S35 and FIG. 4E).

Then, with an arbitrary numerical data "380" displayed at the franc line position, the "=" or SET(execution) key in the input section 12 is operated to convert the "380" francs into Euros, marks, and liras. Then, the currency rate between the Euro and the mark and the franc and the lira set and stored in the currency conversion rate table memory 16a in the RAM 16 is read out, and based on this rate, a converted value of each of the other currencies is calculated from the specified numerical value "380" corresponding to the currently specified currency franc and is displayed at the line position of the corresponding currency symbol (steps S20, S21, S16, S17, S18). Then, the numerical value "380" of the specified currency franc blinks as the cursor specified position, shown by the arrow P (step S19 and FIG. 4F).

Further, with the specified value "380" blinking correspondently to, for example, the specified currency franc, the CAL/CONV key in the input section 12 is operated to execute a calculation using the specified value "380" as the operated number. Then, the specified operation type stored in the specified-operation data memory 26f is set to be none, and the blinking specified value "380" of the specified currency franc is stored and set in the specified-numerical data memory 16e (steps S20, S36, S37, S27).

Then, the currency conversion mode data stored in the mode data memory 16b is changed to the calculation mode data to start the calculation process program included in the calculation/conversion process program 13a, while the enlarged-character font data 13c previously stored in the ROM 13 is selected as the display font for the liquid-crystal display section 17 (steps S28, S29).

In the currency conversion mode stored in the specified-value data memory 16e, the numerical value "380" of the specified currency franc is set as the operated number, and the operated number "380" is displayed in the enlarged character font using the lower two lines of the liquid-crystal display section 17 as one line (step S30).

Subsequently, when the operation key "+", the numerical keys 100, and the "=" key are operated, the operation type stored in the specified-operation data memory 16f is stored as "+" and displayed in the upper part of the liquid-crystal display section 17. In addition, the display is switched to the number "100" in the enlarged character font using the lower two lines of the liquid-crystal display section 17 as one line. Thereafter, the corresponding calculation "380 + 100 =" is executed, and the calculation result is switched to "480" for display using the same enlarged character font (steps S31, S2, S3, S4).

Thus, according to the electronic calculation apparatus with a currency conversion function configured as described above, the liquid-crystal display section 17, which provides the 4-line display in the normal font and the 2-line display in the enlarged font, displays the four types of currencies including the Euro, the mark, the franc, and the lira. When an arbitrary one of the currencies is specified to input its numerical value and the "=" or SET key is operated to instruct a currency conversion, converted values of these currencies are calculated based on the input value of the specified currency and are displayed in parallel. Then, when an arbitrary one of the currencies is specified as the operated number and a relevant operation key is operated, or the CAL/CONV key is operated to switch the currency conversion mode to the calculation mode, the process enters a calculation display state where the converted value of the specified currency set as the operated number is displayed in the enlarged font using two lines. Then, the calculation is executed depending on a subsequently input number and the "=" key. Therefore, normal numerical calculations can be easily carried out by specifying an arbitrary one of the plural currency converted values as the operated number.

In addition, according to the electronic calculation apparatus with a currency conversion function configured as described above, during display of numerical data input in the calculation mode or corresponding to a calculation result, when the CAL/CONV key is operated to switch the calculation mode to the currency conversion mode, the numerical data displayed in the calculation mode can be specified as a numerical value of an arbitrary one of the four types of currencies including the Euro, the mark, the franc, and the lira and which are displayed in four lines in parallel. Then, by operating the "=" or SET key to instruct a currency conversion, converted values of the other currencies are calculated based on the numerical value of the specified currency introduced in the calculation mode and are displayed in parallel. Consequently, the value calculated in the calculation mode can be used as a numerical value of an arbitrary one of the currencies in order to easily calculate converted values of the other currencies for parallel display.

As a result, the currency conversion mode and the calculation mode are switched as appropriate so that the numerical value of an arbitrary currency can be used directly for a calculation or a calculation result can be used directly as a numerical value of an arbitrary currency. In particular, in an economic zone such as the Euro zone in which various types of currencies exist in common, the present invention enables very convenient and easy-to-understand currency calculations.

Further, the present apparatus is constructed to provide, in the currency conversion mode, the 4-line display using the normal character font while providing, in the calculation mode, the 2-line display using the enlarged character font, thereby enabling easier-to-see numerical display in the calculation mode.

The methods described in the above embodiment, that is, the methods such as the calculation mode process and the currency conversion mode process which are shown in the flow charts in FIGS. 2 and 3 can be stored and distributed in an external storage medium 14 such as a memory card (a ROM card, a RAM card, or the like), a magnetic disc (a floppy disc, a hard disc, or the like), an optical disc (a CD-ROM, a DVD, or the like), or a semiconductor memory. The computer can have its storage medium read section 15 such as a magnet disc driver read in the program stored in the external storage medium 14 so as to control its operation based on the read-in program. Consequently, a function of switching between the currency conversion function and calculation function described in the above embodiment can be realized to execute the currency conversion process and numerical calculation process based on the above methods, as described above.

Additional advantages and modifications will readily occur to those skilled in the art. Therefore, the present invention in its broader aspects is not limited to the specific details, representative devices, and illustrated examples shown and described herein. Accordingly, various modifications may be made without departing from the spirit or scope of the general inventive concept as defined by the appended claims and their equivalents. For example, in the above embodiment, after a calculation in the calculation mode, the CAL/CONV key is used to switch to the currency conversion mode to specify a currency and the calculation result is subsequently used as a value of the specified currency, which is then converted into the other currencies. The following configuration, however, is possible: a currency is specified before the calculation, and each time the calculation result is obtained, it is input and displayed as a value of the specified currency. The conversion key ("=" or SET) is then operated to calculate converted values of the other currencies for display with the value of the specified currency.

The above embodiment is merely an example in every respects and should not be construed in an limited sense. The scope of the present invention should be limited by the attached claims and not restricted by the text of the specification. Various changes and modifications which fall within the scope of the claims should all be understood as belonging to the present invention. Though the values of four currencies are displayed in four lines, these values may be displayed in one or two lines if the length of line is long. Further, these values may be scrolled.

## Claims

1. An electronic calculation apparatus with a currency conversion function comprising:
an input means (12) for inputting a value to be processed,
a processing means (11) for converting the value input by said input means (12) from a first currency into a second currency or for employing the value input by said input means (12) for performing an arbitrary numerical calculation, and
a display means (17) for displaying the values of the first and the second currencies in parallel or for displaying a value of a calculation result,
**characterized by**
a key (CALC/CONV) for switching the processing means (11) between a currency conversion mode and a calculation mode, and
in that the display means (17) is configured to display in accordance with the processing mode selected by said key (CALC/CONV) a plurality of currency values in the currency conversion mode and the value of the calculation result in the calculation mode, the plurality of currency values being displayed in a first font size in a plurality of lines, each currency value in a separate line, and the calculation result being displayed in a second font size which is larger than the first font size using a plurality of the lines.

2. The apparatus according to claim 1, wherein said processing means (11) converts a result of a calculation obtained by said processing means (11) into a value of the second currency.

3. The apparatus according to claim 1 or 2, wherein said processing means (11) executes a calculation for one of the values of the first and second currencies displayed by said display means (17).

4. The apparatus according to claim 3, **characterized by** further comprising a currency specifying means (12) for specifying one of the values of the first and second currencies displayed by said display means (17) and **characterized in that** said processing means (11) executes the calculation for one of the values of the first and second currencies specified by said currency specifying means (12).

5. A currency conversion and calculation method for an electronic calculation apparatus comprising the steps of:
inputting a value to be processed,
converting in a processing means the input value from a first currency into a second currency or employing the input value for performing an arbitrary numerical calculation in the processing means, and
displaying the values of the first and the second currencies in parallel or a value of a calculation result on a display means,
**characterized by**
switching by means of a key the processing means (11) between a currency conversion mode and a calculation mode, and
in that the display means (17) displaying in accordance with the selected processing mode a plurality of currency values in the currency conversion mode and the value of the calculation result in the calculation mode, the plurality of currency values being displayed in a first font size in a plurality of lines, each currency value in a separate line, and the calculation result being displayed in a second font size which is larger than the first font size using a plurality of the lines.

6. A computer readable storage medium having a computer readable program code embodied thereon, the program being adapted to carry out all steps of claim 5.

## Patentansprüche

1. Elektronische Rechenvorrichtung mit einer Währungsumrechnungsfunktion, umfassend:
ein Eingabemittel (12) zur Eingabe eines zu verarbeitenden Wertes,
ein Verarbeitungsmittel (11) zur Umwandlung eines durch das Eingabemittel (12) eingegebenen Wertes von einer ersten Währung in eine zweite Währung oder zur Verwendung des über das Eingabemittel (12) eingegebenen Wertes zur Durchführung einer beliebigen numerischen Rechnung und
ein Anzeigemittel (17) zur parallelen Anzeige des Wertes der ersten und der zweiten Währung oder zur Anzeige eines Wertes eines Rechenergebnisses,
**gekennzeichnet durch**
eine Taste (CALC/CONV) zum Umschalten des Verarbeitungsmittels (11) zwischen einer Währungsumrechnungsbetriebsart und einer Rechenbetriebsart und
**dadurch**, dass das Anzeigemittel (17) konfiguriert ist, in Übereinstimmung mit der durch die Taste (CALC/CONV) ausgewählten Verarbeitungsbetriebsart, eine Mehrzahl von Währungswerten in der Währungsumrechnungsbetriebsart und den Wert des Rechenergebnisses in der Rechenbetriebsart anzuzeigen, wobei die Mehrzahl von Währungswerten in einer ersten Schriftgröße in einer Mehrzahl von Zeilen angezeigt wird, jeder Währungswert in einer getrennten Zeile, und das Rechenergebnis in einer zweiten Schriftgröße angezeigt wird, die größer ist als die erste Schriftgröße, die eine Mehrzahl von Zeilen verwendet.

2. Vorrichtung nach Anspruch 1, wobei das Verarbeitungsmittel (11) ein durch das Verarbeitungsmittel (11) erhaltenes Rechenergebnis in einen Wert der zweiten Währung umwandelt.

3. Die Vorrichtung nach Anspruch 1 und 2, wobei das Verarbeitungsmittel (11) eine Rechnung für den durch die Anzeigemittel (17) angezeigten Wert der ersten oder der zweiten Währung ausführt.

4. Vorrichtung nach Anspruch 3, **dadurch gekennzeichnet, dass** sie des Weiteren ein Währungsangabemittel (12) zum Angeben des durch das Anzeigemittel (17) angezeigten Wertes der ersten oder der zweiten Währung, und **dadurch gekennzeichnet, dass** das Verarbeitungsmittel (11) die Rechnung für den durch das Währungsspezifizierungsmittel (12) spezifizierten Wert der ersten oder der zweiten Währung ausführt.

5. Währungsumwandlungs- und Rechenverfahren für eine elektronische Rechenvorrichtung umfassend die Schritte von:
Eingabe eines zu verarbeitenden Wertes,
Umwandlung des Eingabewerts einer ersten Währung in eine zweite Währung in einem Verarbeitungsmittel oder Angabe des Eingabewerts für die Durchführung einer beliebigen numerischen Rechnung in dem Verarbeitungsmittel, und
Parallele Anzeige der Werte der ersten und der zweiten Währung oder eines Werts eines Rechenergebnisses auf einem Anzeigemittel,
**gekennzeichnet durch**
Umschaltung des Verarbeitungsmittels (11) mittels einer Taste zwischen einer Währungsumwandlungsbetriebsart und einer Rechenbetriebsart, und
**dadurch**, dass das Anzeigemittel (17) in Übereinstimmung mit der ausgewählten Verarbeitungsbetriebsart eine Mehrzahl von Währungswerten in der Währungsumwandlungsbetriebsart und den Wert eines Rechenergebnisses in der Rechenbetriebsart anzeigt, wobei die Mehrzahl der Währungswerte in einer ersten Schriftgröße in einer Mehrzahl von Zeilen angezeigt wird, jeder Währungswert in einer getrennten Zeile, und das Rechenergebnis in einer zweiten Schriftgröße angezeigt wird, welche größer ist als die erste Schriftgröße und die eine Mehrzahl von Zeilen verwendet.

6. Ein computerlesbareres Speichermedium, das einen computerlesbaren Programmcode beinhaltet, wobei das Programm angepasst ist alle Schritte von Anspruch 5 auszuführen.

## Revendications

1. Appareil électronique de calcul avec une fonction de conversion de devises, comprenant :
un moyen (12) d'entrée destiné à entrer une valeur à traiter ;
un moyen (11) de traitement destiné à convertir la valeur entrée par ledit moyen (12) d'entrée d'une première devise en une seconde devise ou à employer la valeur entrée par ledit moyen (12) d'entrée pour effectuer un calcul numérique quelconque ; et
un moyen (17) d'affichage destiné à afficher en parallèle les valeurs de la première et de la seconde devise ou à afficher une valeur d'un résultat de calcul,
**caractérisé :**
**par** une touche (CALC/CONV) destinée à basculer le moyen (11) de traitement entre un mode conversion de devises et un mode calcul ; et
en ce que le moyen (17) d'affichage est constitué pour afficher, selon le mode de traitement choisi par ladite touche (CALC/CONV) une pluralité de valeurs de devise en mode conversion de devises et la valeur du résultat de calcul en mode calcul, la pluralité de valeurs de devise étant affichée dans une première taille de police de caractères dans une pluralité de lignes, chaque valeur de devise dans une ligne distincte, et le résultat de calcul étant affiché dans une seconde taille de police de caractères qui est plus grande que la première taille de police de caractères en utilisant une pluralité des lignes.

2. Appareil selon la revendication 1, dans lequel ledit moyen (11) de traitement convertit un résultat d'un calcul obtenu par ledit moyen (11) de traitement en une valeur de la seconde devise.

3. Appareil selon la revendication 1 ou 2, dans lequel ledit moyen (11) de traitement effectue un calcul pour l'une des valeurs des première et seconde devises affichées par ledit moyen (17) d'affichage.

4. Appareil selon la revendication 3, **caractérisé en ce qu'**il comprend en outre un moyen (12) de spécification de devise destiné à spécifier l'une des valeurs des première et seconde devises affichées par ledit moyen (17) d'affichage et **caractérisé en ce que** ledit moyen (11) de traitement exécute le calcul pour l'une des valeurs des première et seconde devises spécifiée par ledit moyen (12) de spécification de devise.

5. Procédé de conversion et de calcul de devises pour un appareil électronique de calcul, comprenant les étapes consistant :
à entrer une valeur à traiter ;
à convertir, dans un moyen de traitement, la valeur entrée d'une première devise en une seconde devise ou à employer la valeur entrée pour effectuer, dans le moyen de traitement, un calcul numérique quelconque ; et
à afficher, sur un moyen d'affichage, les valeurs de la première et de la seconde devise en parallèle ou une valeur d'un résultat de calcul,
**caractérisé :**
**par** le fait de basculer, au moyen d'une touche, le moyen (11) de traitement entre un mode conversion de devises et un mode calcul ; et
en ce que le moyen (17) d'affichage affiche, selon le mode de traitement choisi, une pluralité de valeurs de devise en mode conversion de devises et la valeur du résultat de calcul en mode calcul, la pluralité de valeurs de devise étant affichée dans une première taille de police de caractères dans une pluralité de lignes, chaque valeur de devise dans une ligne distincte, et le résultat de calcul étant affiché dans une seconde taille de police de caractères qui est plus grande que la première taille de police de caractères en utilisant une pluralité des lignes.

6. Support de mémorisation lisible par processeur dans lequel est incorporé du code de programme lisible par processeur, le programme étant apte à exécuter toutes les étapes de la revendication 5.
